# FASCICULE DE BREVET EUROPEEN

(11) **EP 0 765 539 B1**
(45) Date de publication et mention de la délivrance du brevet: **13.05.1998**
(21) Numéro de dépôt: 95923411.3
(22) Date de dépôt: 19.06.1995
(51) Int. Cl.: H02K 1/20

(54) **STATOR BOBINE A ENCOCHES POUR MACHINE ELECTRIQUE TOURNANTE, PROCEDE DE REALISATION D'UN TEL STATOR ET MACHINE COMPRENANT UN TEL STATOR**
BEWICKELTER, GENUTETER STAENDER FUER ROTIERENDE ELEKTRISCHE MASCHINE, HERSTELLUNGSVERFAHREN DAFUER UND ELEKTROMOTOR MIT EINEM DERARTIGEN STATOR
SLOTTED COILED STATOR FOR AN ELECTRICAL ROTATING MACHINE, METHOD FOR THE PRODUCTION OF SUCH A STATOR AND MACHINE COMPRISING SUCH A STATOR

(30) Priorité: 17.06.1994 FR 9407472
(43) Date de publication de la demande: 02.04.1997
(73) Titulaire: MOTEURS LEROY-SOMER, F-16015 Angouleme Cédex (FR)
(72) Inventeur: COUPART, Eric, F-16000 Angoulème (FR)
(74) Mandataire: Derambure, Christian
(86) Numéro de dépôt international: FR9500810
(87) Numéro de publication internationale: WO9535592

(56) Documents cités:
- EP-A- 0 428 323
- DE-A- 2 928 027
- FR-A- 697 797
- FR-E- 30 151
- GB-A- 162 281
- GB-A- 2 194 104

## Description

La présente invention concerne un stator bobiné à encoches pour machine électrique tournante et un procédé de réalisation d'un tel stator. Elle concerne aussi une machine comprenant un tel stator.

Dans de nombreuses machines électriques tournantes, moteurs ou générateurs de courant, le stator a une forme extérieure cylindrique, ce stator étant constitué de tôles en forme de disque empilées face contre face et bord à bord. Cette structure présente certains inconvénients. En premier lieu, comme les tôles sont généralement découpées dans un rouleau ou une plaque de métal rectangulaire, la découpe de tôles circulaires génère une importante perte de matière. En deuxième lieu, ce type de stator est difficile à refroidir extérieurement puisque la surface d'échange, constituée par le pourtour extérieur du stator, c'est-à-dire les tranches des tôles placées face contre face et bord à bord, est très réduite par rapport à la masse à refroidir.

Des structures de stator ont été imaginées pour tenter de pallier ces inconvénients. D'une manière générale, un tel stator est constitué de tôles métalliques superposées face contre face, chaque tôle étant décalée angulairement d'une tôle adjacente suivante, par rapport à l'axe du stator, d'un angle (α) constant étal à un multiple de l'angle correspondant au pas des encoches, chaque tôle ayant sensiblement la forme d'un polygone régulier, notamment d'un carré, dont chaque coin est tronqué selon un contour circulaire, ou proche d'un contour circulaire, symétrique par rapport à la bissectrice dudit coin, identique pour tous les coins, et correspondant à un secteur circulaire d'angle au centre sensiblement égal, ou supérieur, audit angle (α), la distance par rapport à l'axe du stator et la forme dudit contour étant déterminées en fonction de l'angle (α) de façon que, en projection sur un plan perpendiculaire à l'axe du stator, le contour d'une tôle prolonge sensiblement le contour d'une tôle successive adjacente ou se superpose partiellement audit contour.

De telles structures permettent de diminuer les pertes de matériau magnétique au découpage des tôles, d'augmenter le diamètre magnétique équivalent du paquet de tôles magnétiques, et d'améliorer le refroidissement du stator en obligeant l'air à passer transversalement dans les espaces ménagés entre les coins, espacés les uns des autres, des tôles ayant des positions identiques par rapport à l'axe du stator. Une telle structure est décrite dans le document GB-A-2 194 104.

Malgré ces avantages importants, de telles structures ne sont pas utilisées industriellement, pour la raison principale que l'on ne sait pas relier les tôles entre elles de façon simple et fiable afin de pouvoir manipuler en toute sécurité le paquet de tôles ainsi constitué pendant toutes les phases d'assemblage du stator, puis celles du moteur.

En effet, les tôles magnétiques sont très fines, et leurs différents coins, décalés les uns par rapport aux autres, ne se soutiennent et ne se protègent pas les uns les autres : ils sont donc très exposés et peuvent être très facilement déformés, tordus, endommagés, lors du moindre choc ou lors d'une manutention.

Le but de la présente invention est de remédier aux inconvénients des structures de stator connues et de proposer une structure du type précité dans laquelle les tôles décalées sont reliées les unes aux autres d'une manière simple et fiable, ainsi qu'un procédé de réalisation d'un tel stator, et une machine électrique tournante comportant un tel stator.

Suivant l'invention, le stator du type précité est caractérisé en ce que au moins un sur deux des coins tronqués de chaque tôle est relié au coin correspondant de chacune des deux tôles adjacentes par au moins un point de soudure situé en un endroit où les deux contours se prolongent ou se superposent, les points de soudure étant situés dans des positions angulaires respectives prédéterminées et cycliquement reproductibles par rapport à l'axe du stator et étant répartis sensiblement régulièrement autour de l'axe de façon telle que les points de soudure sont alignés selon des lignes de points de soudure sensiblement parallèles à l'axe du stator.

Au moins un sur deux et de préférence chacun des deux coins tronqués de chaque tôle est ainsi fixé par deux points de soudure aux coins correspondants respectifs de la tôle précédente et de la tôle suivante dans le paquet de tôle.

L'expérience a montré que ces points de soudure suffisent à donner à chaque coin de tôle une rigidité suffisante, au sein du paquet de tôles, pour permettre les manipulations dudit paquet au cours des diverses opérations liées aux phases successives d'assemblage du stator, puis du moteur.

Ceci est d'autant plus vrai que l'angle a de décalage angulaire de deux tôles adjacentes a une valeur plus faible égale au produit de l'angle correspondant au pas des encoches par un nombre entier petit.

Ainsi, pour une tôle découpée dans un carré, chaque tôle est reliée à une tôle adjacente par au moins deux, et de préférence quatre, points de soudure.

Par ailleurs, le paquet de tôles n'est pas rigidifié par ces points de soudure séparés. Au contraire, ce paquet de tôles est susceptible de s'allonger légèrement à la manière d'un accordéon si l'on exerce une traction sur ses deux extrémités axiales, chaque tôle, ou chaque coin de chaque tôle, se déformant légèrement entre les points de soudure pour permettre à chaque tôle de s'écarter légèrement des tôles adjacentes.

Toutefois, le paquet de tôles reprend sa forme initiale dès que cette traction cesse, et présente en l'absence d'une telle traction une forme suffisamment stable pour permettre un assemblage sûr et fiable du stator.

Enfin, il est très facile de relier par un point de soudure les coins de deux tôles magnétiques qui se prolongent ou se superposent, étant donné la très faible épaisseur de ces tôles, dans la mesure où ce point de soudure n'est pas destiné à supporter des efforts importants et/ou répétés.

Selon un autre aspect de l'invention, le procédé de réalisation d'un stator selon le premier aspect de l'invention, comprend les étapes successives consistant à :
- découper des tôles ayant sensiblement la forme d'un polygone régulier, notamment d'un carré, dont chaque coin est tronqué suivant un contour prédéterminé ;
- empiler les tôles face contre face en décalant chaque tôle de la tôle précédente d'un angle (a) constant.

Suivant l'invention, ce procédé est caractérisé en ce qu'on relie au moins un sur deux des coins tronqués de chaque tôle au coin tronqué correspondant de chacune des deux tôles adjacentes par au moins un point de soudure.

Selon une version préférée de l'invention, le serrage des tôles entre elles est assuré par les gaines isolantes de fond d'encoche du stator.

Ces gaines ont pour fonction d'isoler les tôles du stator des bobines installées à l'intérieur des encoches. Les tôles sont maintenues serrées entre elles compte tenu du serrage des gaines entre les bobines et la paroi interne du stator, du nombre important de gaines portées par le stator et du contact entre les extrémités de gaine et les tôles d'extrémité du paquet de tôles. En effet, les extrémités des gaines isolantes sont de façon classique repliées sur elles-mêmes vers le paquet de tôles en exerçant chacune sur celui-ci un effet de serrage.

L'invention vise également une machine électrique tournante.

Cette machine est caractérisée en ce qu'elle comprend un stator selon l'invention.

Selon une version avantageuse de l'invention, la machine comprend des moyens constituant sur le pourtour du stator des canaux longitudinaux sensiblement parallèles à l'axe, ces canaux étant ouverts du côté du stator et étant par ailleurs en communication directe avec une arrivée ou une sortie de fluide de refroidissement.

Le décalage des tôles entraîne que certaines parties du bord des tôles, les parties en saillie, ne sont pas recouvertes par les tôles contiguës comme on l'a vu plus haut. La disposition de canaux sur le pourtour du stator comme précité permet de forcer un fluide de refroidissement, notamment de l'air, à circuler entre ces parties en saillie, suivant une direction transversale tangente au pourtour du stator et sensiblement parallèle aux tôles.

Selon une version préférée de l'invention, au moins certains des canaux sont en communication directe avec l'arrivée ou la sortie de fluide par au moins une extrémité du canal.

Selon une version préférée de l'invention, les canaux sont espacés les uns des autres.

Selon une version préférée de l'invention, la portion de stator située entre deux canaux immédiatement voisins est au moins partiellement en contact avec le milieu ambiant de la machine.

Le fluide de refroidissement circule donc à chaque passage dans un seul canal, en passant sous la paroi du canal entre les portions en saillie des tôles, en étant aspiré ou rejeté. Le trajet du fluide de refroidissement est alors particulièrement court.

Selon une autre version préférée de l'invention, les canaux sont adjacents et les canaux d'un premier groupe et les autres canaux, constituant un deuxième groupe, sont en communication directe respectivement avec une arrivée et une sortie de fluide de refroidissement.

Cette fois, le fluide entre par un canal et sort par un canal adjacent en passant sous la paroi du canal entre les portions en saillie des tôles.

Selon une version préférée de l'invention, les canaux sont en communication par une première extrémité respectivement avec lesdites arrivée et sortie et sont obturés à une deuxième extrémité opposée à la première extrémité.

On peut par exemple faire en sorte que les extrémités obturées de canaux contigus occupent des positions opposées suivant la direction axiale du stator.

Selon une version préférée de l'invention, au moins une portion de la paroi des canaux est constituée par la paroi du carter.

Par exemple, on peut configurer les canaux de sorte que la face des canaux opposée au stator est constituée par la paroi du carter. On évite ainsi la mise en place d'une paroi supplémentaire. Cela facilite l'échange thermique entre le fluide à l'intérieur du canal et l'extérieur du carter. On réalise aussi une économie de matière.

Selon une version avantageuse de l'invention, la sortie de fluide de refroidissement est associée à des moyens de dépression du fluide.

En effet, pour de nombreuses configurations du circuit de refroidissement externe du carter, on constate que la mise en circulation du fluide, notamment de l'air, s'effectue plus efficacement en créant une dépression plutôt qu'une surpression. Cela est particulièrement vrai pour la circulation dans les canaux précités.

D'autres caractéristiques et avantages de l'invention apparaîtront encore dans la description qui va suivre de plusieurs modes préférés de réalisation. Aux dessins annexés donnés à titre d'exemples non-limitatifs:
- la figure 1 est une vue en perspective d'un premier mode de réalisation du stator selon l'invention;
- la figure 2 est une vue axiale du stator de la figure 1;
- la figure 3 est une vue en perspective d'un deuxième mode de réalisation du stator selon l'invention;
- la figure 4 est une vue axiale du stator de la figure 3;
- la figure 5 est une vue en perspective d'un premier mode de réalisation de la machine selon l'invention;
- la figure 6 est une vue en coupe transversale de la machine de la figure 5;
- la figure 7 est une vue en coupe longitudinale suivant les plans VII-VII de la machine de la figure 6;
- la figure 8 est une vue en perspective du carter de la machine de la figure 5;
- la figure 9 est une vue en perspective d'un deuxième mode de réalisation de la machine selon l'invention;
- la figure 10 est une vue en coupe transversale de la machine de la figure 9 ;
- la figure 11 est une vue en coupe longitudinale de la machine suivant les plans XI-XI de la figure 10 ;
- la figure 12 est une vue analogue à la figure 11 d'un troisième mode de réalisation de la machine ;
- la figure 13 est une vue en perspective d'un carter selon un quatrième mode de réalisation de la machine ;
- la figure 14 est une vue en perspective d'un autre mode de réalisation du carter de la machine selon l'invention ;
- la figure 15 est une vue en élévation du carter de la figure 14 ;
- la figure 16 est une vue en coupe transversale selon XVI-XVI à la figure 15 ;
- la figure 17 est une vue semblable à la figure 15, partiellement en coupe longitudinale selon XVII-XVII à la figure 16, d'une machine comportant un carter selon les figures 14 à 16 ;
- les figures 18 et 19 sont respectivement des vues en élévation et en plan montrant schématiquement l'opération de soudage des tôles dans un mode de réalisation du procédé selon l'invention.

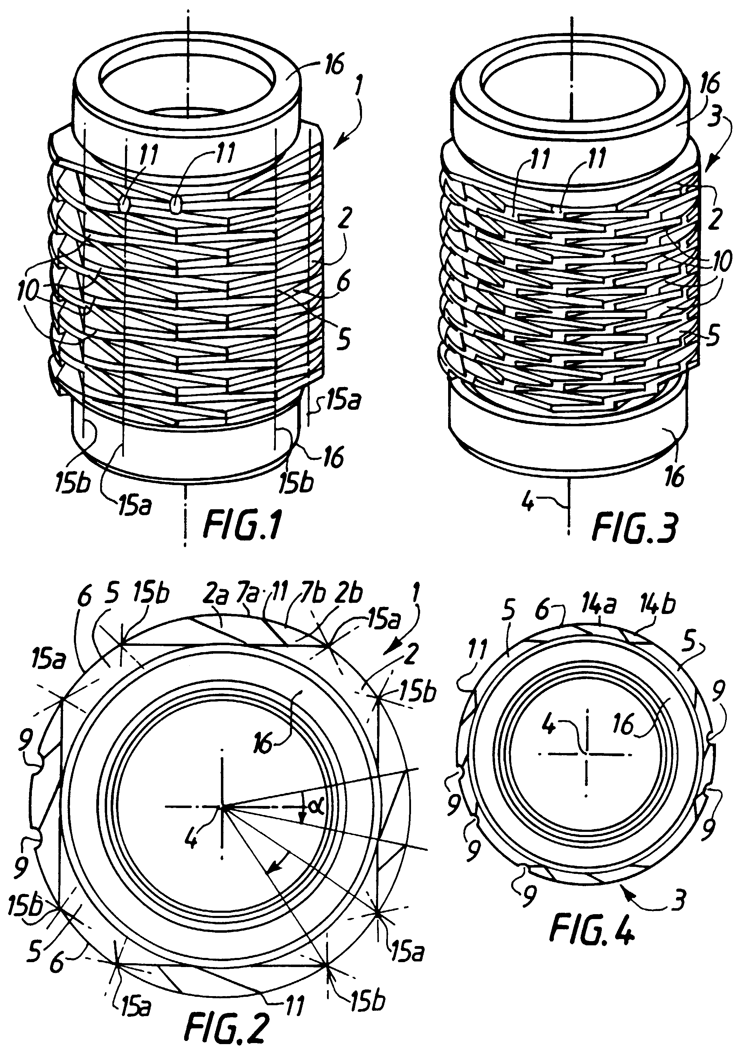

Les figures 1 et 2 présentent un stator 1 bobiné à encoches pour machine électrique tournante, selon l'invention. Ce stator fait partie d'un moteur mais il pourrait aussi s'agir d'un stator pour générateur de courant.

Le stator 1 est constitué de tôles métalliques superposées face à face 2. Néanmoins, le stator peut alternativement être constitué de groupes superposés de deux tôles métalliques superposées face à face et bord à bord. Tout ce qui va être exposé pour les tôles est donc également valable alternativement pour des groupes de deux tôles. Les groupes peuvent comporter plus de deux tôles. L'effet d'augmentation du diamètre magnétique équivalent diminue lorsqu'on augmente le nombre de tôles par groupe. La surface d'échange thermique entre les tôles et le fluide de refroidissement diminue aussi dans ces conditions. Dans ces deux cas, les tôles ou les groupes sont sensiblement identiques entre eux.

Les tôles 2 ont une forme générale de polygone régulier. Dans le présent exemple, ce polygone est un carré. Sur chaque tôle 2, chacune des parties les plus éloignées de l'axe 4 du stator, ici chacun des quatres coins 5 de la tôle 2, est tronquée suivant un contour prédéterminé. Ici, chaque coin 5 a son bord 6 sensiblement en forme d'arc de cercle centré sur l'axe 4. Le rayon de ce cercle pour chaque coin 5 est identique pour toutes les tôles. Ici, ce rayon est même identique pour tous les coins 5 des tôles.

Chaque tôle 2 est décalée d'un angle a constant suivant l'axe 4 du stator par rapport à la tôle précédente. La mesure de cet angle est sensiblement différente d'un multiple de 45°.

De plus, la mesure de cet angle a est une fraction d'un multiple de 360° et on peut en outre choisir cette mesure de sorte que cette mesure de l'angle, exprimée en degrés, soit un multiple de 360/nombre d'encoches du stator. Dans le présent exemple, l'angle a vaut 22,5° et remplit ces conditions.

Pour chaque coin 5 des tôles 2, le rayon du cercle précité constituant le bord 6, est sensiblement supérieur au rayon du cercle géométriquement inscrit dans le pourtour carré des tôles. De plus, ce rayon est suffisamment faible pour que sur deux tôles 2a et 2b successives quelconques, les arcs de cercle homologues 7a et 7b se prolongent ou se superposent et constituent un arc de cercle sensiblement continu en vue axiale du stator, c'est-à-dire en projection sur un plan perpendiculaire à l'axe 4, comme sur la figure 2.

Dans le mode de réalisation de la figure 2, on peut distinguer une très fine séparation 11 entre deux arcs de cercle 7a, 7b homologues.

Les figures 3 et 4 montrent un autre mode de réalisation du stator selon l'invention. Dans ce mode de réalisation, le stator 3 est identique au précédent sauf que le rayon du cercle constituant le bord 6 des coins 5 des tôles est plus faible que dans le précédent mode. De la sorte, les arcs de cercle 14a, 14b constituant le bord 6 des coins 5 des tôles se chevauchent en partie mutuellement deux à deux et forment tous ensemble un cercle continu en vue axiale du stator comme le montre la figure 4.

En référence aux figures 1 et 3, le décalage des tôles 2 d'un angle a constant donne donc au stator 1 une forme générale cylindrique, les angles a des tôles décalées créant des hélices 10 sur le pourtour du stator. Pour des tôles de forme générale carrée décalées de 22,5° l'une de l'autre, il y a quatre hélices 10.

C'est en raison du chevauchement précité que l'on n'a pas dessiné à la figure 3 de trait séparant deux coins adjacents dans la région dudit chevauchement, de façon à bien représenter les hélices 10.

Lorsque l'empilement et le décalage des tôles a permis de constituer le paquet de tôles, les tôles sont reliées entre elles de sorte que chaque tôle ou groupe de tôles est fixé à la tôle ou au groupe précédent par au moins deux points de soudure 11 réalisés sur lesdits arcs de cercle 7a, 7b ou 14a, 14b.

En variante, chaque tôle peut être légèrement échancrée au niveau de chaque point de soudure 11, comme représenté en 9 aux figures 2 et 4 : ceci permet de supprimer tout risque que le point de soudure 11 fasse saillie extérieurement par rapport au contour extérieur cylindrique du paquet de tôles formé par les bords circulaires 6 des tôles 2.

On peut réaliser ces points de soudure 11 point par point. Toutefois, il est avantageux de les réaliser en mettant en place des lignes de points de soudure comme dans le procédé selon l'invention dont un mode de réalisation va être exposé ci-après.

Suivant une version préférée de l'invention, un procédé de réalisation d'un stator selon l'invention comprend plusieurs étapes successives.

Une étape consiste d'abord à empiler les tôles 2 face contre face pour former le stator 1 ou 3 comme on vient de le voir. L'étape suivante consiste à relier au moins un sur deux des coins tronqués de chaque tôle au coin correspondant de chacune des deux tôles adjacentes par au moins un point de soudure 11.

En référence aux figures 18 et 19, une étape suivante consiste à souder en déplaçant une ou des têtes de soudage activées 70 relativement au stator 1, à la surface du stator 1, suivant des trajectoires 15a, 15b continues sensiblement parallèles à l'axe 4. Ces trajectoires 15a, 15b sont agencées pour souder au moins un sur deux des coins tronqués de chaque tôle 2 par au moins un point de soudure 11 au coin correspondant 5 de chacune des tôles adjacentes 2. Chaque tôle est ainsi reliée par au moins deux points de soudure à chacune des tôles adjacentes. Ces trajectoires 15a, 15b sont représentées pour le présent exemple en traits mixtes sur les figures 1 et 2.

L'opération de soudage est mise en oeuvre sur une machine classique présentant plusieurs têtes de soudage 70 mobiles simultanément verticalement par rapport à une platine 72 sur laquelle est disposé le stator avec son axe 4 vertical. La platine 72 est mobile en rotation autour de son axe. La machine comprend notamment un mandrin cylindrique non représenté qui assure le centrage et l'indexage des tôles entre elles. Elle comprend aussi des moyens de pressage non représentés permettant d'exercer un effort axial sur le paquet de tôles durant le soudage.

Dans le présent exemple, les trajectoires 15a, 15b sont rectilignes et parallèles à l'axe 4 du paquet de tôles. Compte tenu de la forme générale carrée des tôles et de la valeur de 22,5° choisie pour l'angle a, et dans l'hypothèse où un sur deux des coins de chaque tôle est soudé aux coins correspondants, les trajectoires 15a, 15b sont au nombre de huit aux figures 18 et 19, ce qui permet de relier par deux points de soudure les tôles contiguës. La machine utilisée pour cette opération présente ici quatre têtes de soudage 70.

Dans le mode de réalisation préféré, dans lequel chaque coin est relié par un point de soudure au coin correspondant des deux tôles adjacentes, chaque tôle est reliée par quatre points de soudure à chacune des deux tôles qui lui sont adjacentes, et le stator présente sur sa périphérie seize trajectoires ou lignes de points de soudure 15a, 15b, comme représenté à la figure 2.

Dans le présent exemple des figures 18 et 19 et de façon générale, lorsque le nombre n de trajectoires 15a, 15b est pair, ici huit, et double de celui des têtes de soudage 70, ici quatre, le procédé comprend les étapes successives consistant à:
- souder en déplaçant simultanément les n/2 têtes activées 70 relativement au stator 1 à la surface du stator suivant les n/2 premières trajectoires 15a ;
- éloigner de l'axe les têtes 70 relativement au stator 1 ;
- déplacer les têtes 70 relativement au stator 1 en rotation d'un angle β donné autour de l'axe 4 du stator ;
- rapprocher les têtes 70 jusqu'à la surface du stator 1 ; et
- souder en déplaçant simultanément les têtes activées 70 relativement au stator 1 à la surface du stator suivant les n/2 dernières trajectoires 15b.

Ici, l'angle β est égal à l'angle a et vaut 22,5°. Pour seize trajectoires, les quatre têtes de soudage 70 font deux trajets aller et retour le long de la surface du stator 1 ou 3.

On peut faire en sorte que les têtes 70 parcourent les premières trajectoires 15a dans un premier sens suivant la direction axiale du stator 1, par exemple suivant un mouvement ascendant, et parcourent les dernières trajectoires 15b dans le sens opposé au premier sens, par exemple suivant un mouvement descendant. La rotation des têtes de soudage 70 relativement au stator est obtenue en tournant la platine 72 de l'angle β, soit 22,5°, autour de son axe.

On pourrait aussi utiliser une machine à huit têtes de soudage afin de mettre en place les huit lignes de points de soudure en un seul passage, ou seize lignes de points de soudure en deux passages.

Une étape suivante du procédé consiste à serrer les tôles 2 axialement les unes contre les autres depuis les extrémités axiales du stator 1 par des moyens adaptés. Ici, le serrage des tôles entre elles est assuré par les gaines isolantes de fond d'encoche du stator (non représentées) qui sont bien connues dans le domaine des machines électriques tournantes, chaque gaine s'étendant suivant toute la longueur du stator et ayant ses extrémités libres repliées sur elles-mêmes vers le stator.

Les bobines sont installées de façon classique dans les encoches. En référence aux figures 1 à 4, on installe ensuite les pièces d'extrémité 16 qui sont classiques et n'ont pas été représentées en détail. Elles renferment les têtes de bobine du stator 1. Ces pièces ne sont en fait nécessaires que dans certaines applications dans lesquelles les têtes de bobines doivent être protégées du fluide de refroidissement.

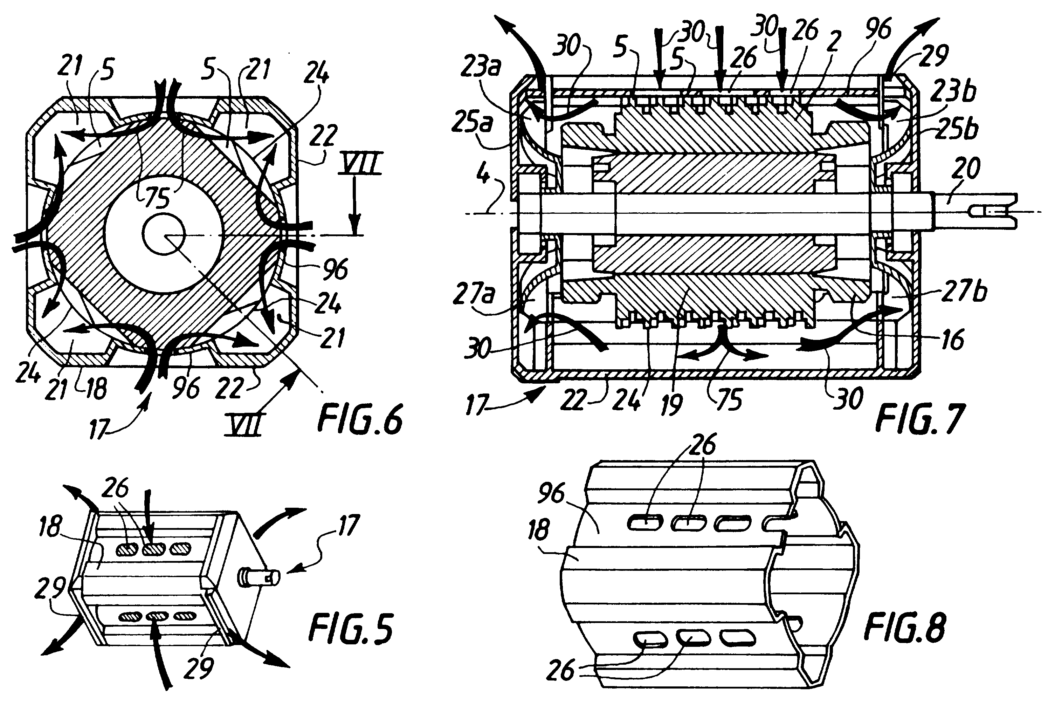

Les figures 5, 6 et 7 représentent une machine, ici un moteur 17, comprenant un stator identique à celui des figures 1 et 2. Il pourrait alternativement comprendre un stator comme celui des figures 3 et 4. Ce moteur 17 comprend notamment un carter 18, représenté sur la figure 8, un rotor 19 et un arbre de sortie 20. Le moteur 17 a pour axe l'axe 4 du stator 1.

Le moteur 17 comprend des moyens constituant sur le pourtour du stator 1 quatre canaux longitudinaux 21 sensiblement parallèles à l'axe 4 et régulièrement répartis sur le pourtour du moteur 17 comme le montre la figure 6. Les canaux 21 sont espacés les uns des autres.

Une portion 22 de la paroi des canaux 21 est constituée par la paroi du carter 18 et la portion restante 24 est constituée par le pourtour du stator 1. Les canaux 21 sont donc ouverts du côté du stator.

Les canaux 21 sont par ailleurs en communication directe avec une sortie de fluide de refroidissement qui est ici de l'air. Ils pourraient aussi être en communication directe avec une arrivée de fluide de refroidissement. Les canaux 21 sont en communication directe avec la sortie de fluide par leurs deux extrémités 23a, 23b, au voisinage des flasques d'extrémité respectifs 25a, 25b du moteur.

En référence aux figures 5, 6 et 8, chaque portion de stator située entre deux canaux 21 immédiatement voisins est au moins partiellement en contact avec le milieu ambiant du moteur, ici l'air atmosphérique. Pour cela, le carter 18 présente entre deux canaux voisins 21 trois ouvertures ovales traversantes 26 à travers lesquelles on aperçoit les tôles 2 du stator 1.

De façon plus précise, le carter 18 représenté aux figures 5 à 8 comporte une surface périphérique présentant en section droite une forme sensiblement carrée qui présente quatre parties d'angle constituant chacune la partie 22 d'un canal longitudinal 21 correspondant.

Entre deux parties d'angle 22 adjacentes, le carter présente une région 96 plus proche de l'axe 4 et de forme intérieure cylindrique dont le diamètre intérieur est très légèrement supérieur au diamètre extérieur du stator 1 : de la sorte, la paroi intérieure de ces régions 96 est sensiblement tangente à la paroi périphérique extérieure du stator 4, et comporte les trois ouvertures 26 précitées.

La sortie de l'air est associée à des moyens de dépression. Pour cela, le moteur 17 comprend deux ventilateurs 27a et 27b logés dans les flasques respectifs 25a et 25b, solidaires de l'axe 20 du moteur et communiquant avec des ouvertures 29 des flasques 25a et 25b. Le moteur est agencé de sorte que les ventilateurs 27a, 27b créent une dépression aux extrémités respectives 23a, 23b des canaux 21.

Grâce à cette dépression, de l'air ambiant rentre dans les canaux 21 par les ouvertures ovales 26, directement au contact des tôles 2 du stator 1. Du fait que les parois intérieures des régions 96 sont tangentes au stator, l'air pénétrant dans le stator ou sortant de celui-ci par les ouvertures 26 (flèche 30) est obligé de circuler dans un plan perpendiculaire à l'axe 4 entre les coins 5 des tôles 2 comme le montrent les flèches 75 de la figure 6 pour aboutir dans les canaux 21. L'air circule dans les canaux jusqu'aux ventilateurs 23a et 23b et est ensuite rejeté par les ouvertures 29. La circulation de l'air est représentée au moyen des flèches 75 et 30.

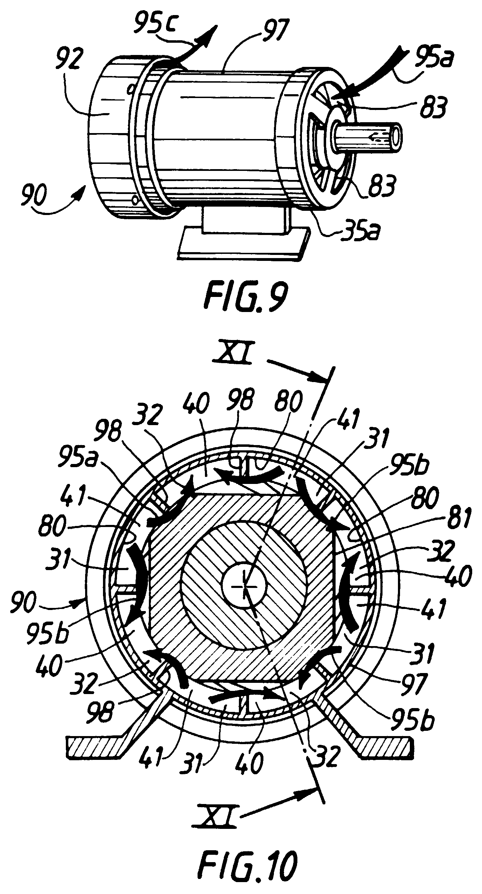

Dans un autre mode de réalisation du moteur selon l'invention représenté sur les figures 9 à 11, le moteur 90 comprend des canaux 31, 32 adjacents. Ils sont constitués ici encore par la paroi intérieure 80 du carter 97 et le pourtour 81 du stator, et des nervures radiales 98 en saillie vers l'intérieur jusqu'au stator par rapport à la paroi intérieure 80.

Les canaux 31 d'un premier groupe et les autres canaux 32, constituant un deuxième groupe, sont en communication directe respectivement avec une arrivée et une sortie d'air constituées par des ouvertures 83 dans les flasques d'extrémités respectifs 35a et 35b du moteur.

Les canaux 31 et 32 sont en communication par une première extrémité 40 respectivement avec l'arrivée et la sortie d'air. Ils sont obturés à une deuxième extrémité 41 opposée à la première extrémité 40.

Pour cela, le stator présente à l'une au moins de ses extrémités une plaque axiale 36a, 36b réalisée en un matériau relativement mou, isolant et étanche, notamment en matière plastique. Ces plaques 36a, 36b, ici au nombre de deux, ont un rayon intérieur sensiblement égal au rayon du pourtour intérieur du stator. Chaque plaque 36a, 36b est fixée à la tôle 2 ou le cas échéant au groupe de tôles d'extrémité du stator 2, par des moyens adaptés traversant l'épaisseur de cette tôle ou de ce groupe. Par exemple, les plaques 36a, 36b peuvent être boulonnées. Les plaques s'étendent en certains endroits 38 au-delà du pourtour extérieur du stator afin de constituer les obturations aux extrémités 41 précitées des canaux 31, 32.

Les extrémités obturées 41 de canaux contigus occupent des positions opposées suivant la direction axiale du stator. De plus, les canaux appartiennent aux premier et deuxième groupes de canaux suivant une alternance spatiale des canaux comme on le voit sur la figure 10.

Le moteur 90 comprend dans le prolongement du flasque 35b, à l'extérieur du carter 97, un ventilateur 91 solidaire de l'arbre 20 et agencé pour créer une dépression suffisant à faire circuler l'air dans le circuit de ventilation qui vient d'être décrit. Un déflecteur 92 entourant et protégeant le ventilateur 91 renvoie l'air sortant du ventilateur vers le pourtour du carter 97.

Le circuit de l'air est donc le suivant. La dépression créée par le ventilateur 91 provoque une entrée d'air par les ouvertures 83 à l'extrémité 40 des canaux 31 (flèches 95a). Ceux-ci étant obturés à leur deuxième extrémité 41, l'air s'engouffre transversalement sous les nervures 98 entre les tôles 2 sur le pourtour du stator, comme représenté par les flèches 95b à la figure 10, pour atteindre les canaux 32 contigus. Ceux-ci sont obturés à leur extrémité 41 mais ouverts à leur extrémité 40 par laquelle l'air réchauffé s'échappe en direction du ventilateur 91 (flèches 95c). L'air est finalement évacué par le déflecteur 92. La circulation de l'air est représentée par les flèches 95a, 95b, 95c aux figures 9 à 11.

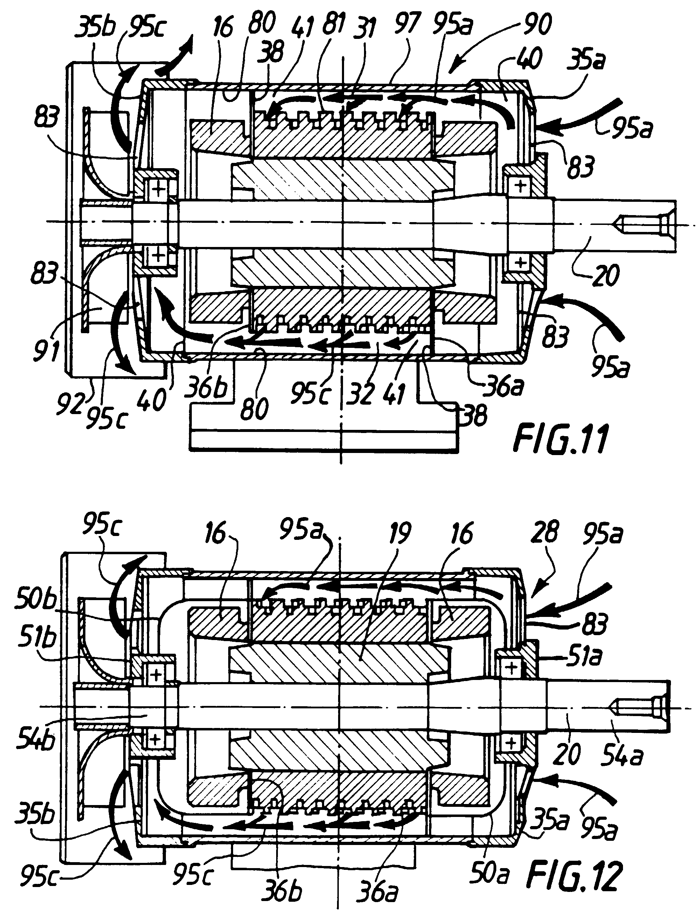

La figure 12 présente un autre mode de réalisation du moteur. Le moteur 28 de la figure 12 est proche de celui de la figure 11 mis à part qu'il comprend deux capots circulaires 50a et 50b reliant respectivement les plaques d'extrémité 36a et 36b aux roulements 51a et 51b. Ces derniers relient chacun un flasque d'extrémité 35a, 35b à une extrémité 54a, 54b de l'arbre 20 du moteur. Les capots 50a, 50b sont configurés pour assurer une isolation étanche du rotor 19 et des extrémités du stator comprenant les pièces 16 et les têtes de bobine, par rapport au circuit de refroidissement par air du pourtour du stator. Les capots 50a et 50b sont réalisés en un matériau adapté, par exemple en métal ou en plastique. La circulation de l'air est identique à celle décrite pour les figures 9 à 11.

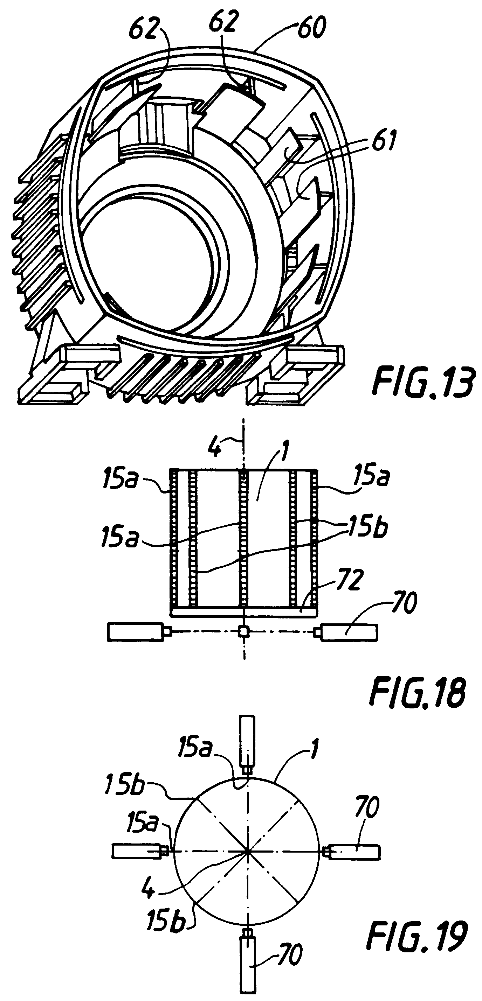

La figure 13 présente un autre mode de réalisation du carter du moteur selon l'invention. Le carter 60 comprend intérieurement douze bandes 61 sensiblement parallèles à l'axe du carter, espacées les unes des autres et disposées pour avoir leur surface tangente au pourtour du stator (non représenté) et pour être en contact avec celui-ci une fois celui-ci installé dans le carter 60. Chaque bande 61 est reliée à la paroi du carter par une nervure longitudinale sensiblement radiale 62 ayant la même longueur que la bande 61 considérée. Les bandes 61 et les nervures 62 sont continues et étanches au fluide de refroidissement externe du stator, ici de l'air.

On comprendra que les formes respectives des carters 18, 60 et 97 sont adaptées à une fabrication par moulage ou injection sous pression de métal léger ou de matière plastique renforcée de fibres.

Dans l'un ou l'autre cas, le carter peut être conçu de façon à ne plus avoir que la seule fonction de séparer le moteur proprement dit du milieu extérieur. La fonction mécanique habituellement remplie par un carter classique est alors entièrement reportée sur les flasques d'extrémité qui sont alors, de manière connue, fixées l'une à l'autre par des tiges filetées qui traversent des éléments d'écartement tubulaires adaptés à maintenir les flasques à une distance prédéterminée l'une de l'autre.

De même, les flasques sont adaptées à porter les pattes de fixation du moteur et tous les accessoires classiques d'un moteur qu'il est inutile de détailler ici.

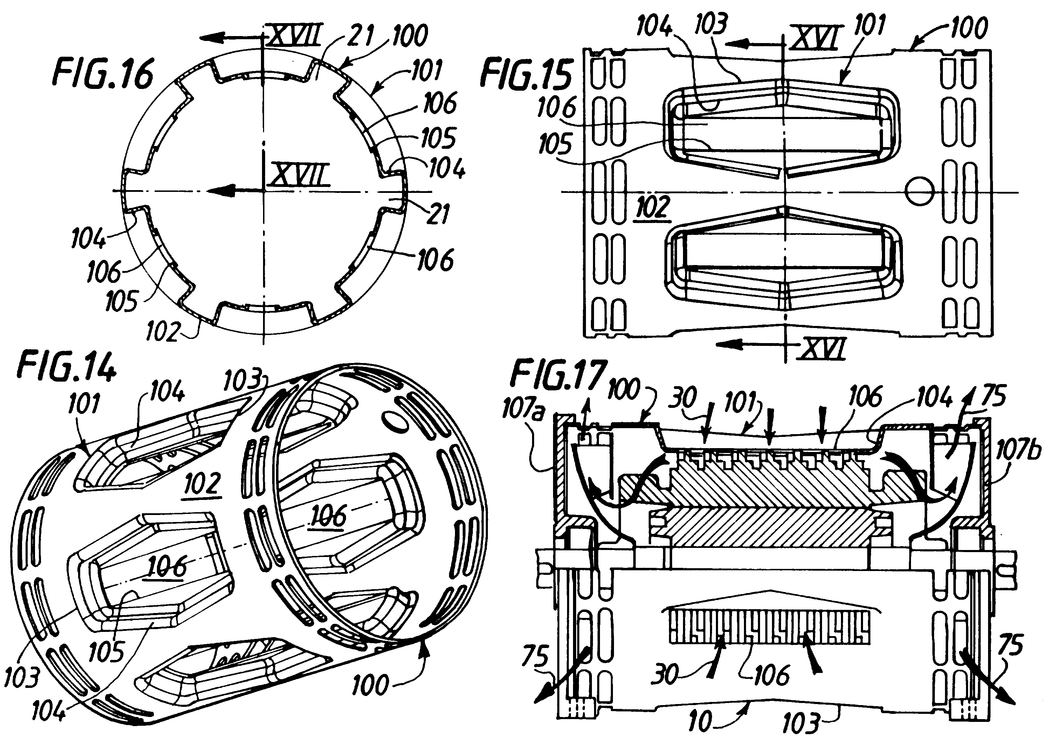

Dans le mode de réalisation représenté aux figures 14 à 18, le carter 100 est adapté à être réalisé, soit par moulage ou injection sous pression de métal léger ou de matière plastique renforcée de fibres, soit à partir d'une tôle découpée, roulée, soudée et emboutie.

Le carter 100 a une forme générale cylindrique et comporte sur sa périphérie plusieurs ouvertures allongées 101, six dans l'exemple représenté.

La paroi cylindrique 102 du carter 100 se prolonge, à partir du bord périphérique 103 de chaque ouverture 101, par une paroi périphérique 104 continue ayant sensiblement une forme en tronc de pyramide allant en se retrécissant vers l'intérieur du carter, jusqu'à un bord périphérique intérieur 105 sensiblement tangent extérieurement au stator 1 et définissant au niveau du stator une ouverture intérieure 106.

La longueur axiale de l'ouverture intérieure 106 est sensiblement égale à celle du stator, de sorte que les ouvertures 106 jouent le rôle des ouvertures 26 du carter 18 des figures 5 à 8. Comme les parois 96 du carter 18, la paroi périphérique continue 104 de chaque ouverture 101, 106 sépare celle-ci (voir figure 16), des deux canaux longitudinaux 21 adjacents définis eux-mêmes par la paroi 102 du carter 100 et la paroi 104 des ouvertures adjacentes. Cette paroi 104 oblige l'air aspiré à travers cette ouverture à passer transversalement sous le bord périphérique intérieur 105 entre les coins tronqués 5 des tôles décalées 2, avant de rejoindre le canal 21 correspondant.

Le carter 100 est adapté à recevoir à ses extrémités axiales des flasques 107a, 107b, la fonction mécanique classique du carter étant remplie soit par le carter 100, soit par lesdits flasques 107a, 107b.

Bien entendu, l'invention n'est pas limitée aux modes de réalisation que l'on vient de décrire, et on peut apporter à ceux-ci de nombreuses modifications et améliorations sans sortir du cadre de l'invention.

On pourrait ainsi remplacer les points de soudure par des points de brasure ou des points de colle, remplacer les arcs de cercle 6 par des contours polygonaux concaves et/ou convexes, symétriques par rapport à la bissectrice dudit coin de façon à pouvoir se prolonger ou se superposer, donner au stator 1 une surface périphérique d'une forme autre que celle d'un cylindre de révolution.

Les lignes de points de soudure 15a, 15b peuvent ne pas être régulièrement réparties autour de l'axe 4 du stator 1, 3, à condition que les positions angulaires respectives des points de soudure soient prédéterminées et cycliquement reproductibles.

## Revendications

1. Stator (1, 3) bobiné à encoches pour machine électrique tournante, constitué de tôles métalliques (2) superposées face contre face, chaque tôle (2) étant décalée angulairement d'une tôle (2) adjacente suivante, par rapport à l'axe (4) du stator (1, 3), d'un angle (a) constant égal à un multiple de l'angle correspondant au pas des encoches, chaque tôle (2) ayant sensiblement la forme d'un polygone régulier, notamment d'un carré, dont chaque coin (5) est tronqué selon un contour (6) circulaire, ou proche d'un contour circulaire, symétrique par rapport à la bissectrice dudit coin (5), identique pour tous les coins (5), et correspondant à un secteur circulaire d'angle au centre sensiblement égal, ou supérieur, audit angle (a), la distance par rapport à l'axe (4) du stator (1, 3) et la forme dudit contour étant déterminées en fonction de l'angle (a) de façon que, en projection sur un plan perpendiculaire à l'axe (4) du stator (1, 3), le contour (6) d'une tôle (2) prolonge sensiblement le contour (6) d'une tôle (2) successive adjacente ou se superpose partiellement audit contour (6), caractérisé en ce que au moins un sur deux des coins (5) tronqués de chaque tôle (2) est relié au coin (5) correspondant de chacune des deux tôles (2) adjacentes par au moins un point de soudure (11) situé en un endroit où les deux contours (6) se prolongent ou se superposent, les points de soudure (11) étant situés dans des positions angulaires respectives prédéterminées et cycliquement reproductibles par rapport à l'axe (4) du stator (1, 3) et étant répartis sensiblement régulièrement autour de l'axe (4) de façon telle que les points de soudure (11) sont alignés selon des lignes (15a, 15b) de points de soudure (11) sensiblement parallèles à l'axe (4) du stator (1, 3).

2. Stator selon la revendication 1, caractérisé en ce que chaque tôle (2) est remplacée par un paquet comprenant au moins deux tôles (2) individuelles de forme identique superposées.

3. Stator (1, 3) selon la revendication 1 ou 2, caractérisé en ce que chaque tôle (2) est légèrement échancrée (9) au niveau de chaque point de soudure (11).

4. Stator selon l'une quelconque des revendications 1 à 3, caractérisé en ce que les lignes (15a, 15b) de points de soudure (11) sont réparties régulièrement autour de l'axe (4) du stator (1, 3).

5. Stator selon l'une quelconque des revendications 1 à 4, les encoches ménagées sur la face intérieure du stator présentant une légère inclinaison par rapport à l'axe (4) du stator (1, 3), caractérisé en ce que les lignes (15a, 15b) formées par les points de soudure (11) correspondants ont une forme d'hélice présentant le même angle d'inclinaison par rapport à l'axe (4) du stator (1, 3).

6. Stator (1, 3) selon l'une des revendications 1 à 5, caractérisé en ce que le stator (1, 3) présente à l'une au moins de ses extrémités une plaque axiale (36a, 36b) réalisée en un matériau relativement mou, isolant et étanche, notamment en matière plastique, ayant un rayon intérieur sensiblement égal au rayon du pourtour intérieur du stator (1, 3), la plaque (36a, 36b) étant fixée à la tôle (2) d'extrémité du stator (1, 3) par des moyens traversant l'épaisseur de cette tôle (2).

7. Procédé de réalisation d'un stator (1; 3) selon l'une des revendications 1 à 6, comprenant les étapes successives consistant à:
- découper des tôles (2) de la forme d'un polygone régulier, notamment d'un carré, dont chaque coin (5) est tronqué suivant un contour prédéterminé (6) ;
- empiler les tôles (2) face contre face en décalant chaque tôle (2) de la tôle (2) précédente d'un angle (a) constant ;
caractérisé en ce qu'on relie au moins un sur deux des coins (5) tronqués de chaque tôle (2) au coin (5) tronqué correspondant de chacune des deux tôles (2) adjacentes par au moins un point de soudure (11).

8. Procédé selon la revendication 7, caractérisé en ce que l'on effectue l'opération de soudage en déplaçant une ou des têtes de soudage (70) activées, relativement au stator (1, 3), à la surface du stator (1; 3), suivant des trajectoires (15a, 15b) continues sensiblement parallèles à l'axe (4), ces trajectoires étant agencées pour souder au moins un sur deux des coins tronqués de chaque tôle par au moins un point de soudure (11) au coin correspondant de chacune des tôles (2) adjacentes.

9. Procédé selon la revendication 8, caractérisé en ce que, le nombre n de trajectoires (15a, 15b) étant pair et double de celui des têtes de soudage (70), le procédé comprend les étapes successives consistant à :
- souder en déplaçant simultanément les n/2 têtes (70) activées relativement au stator (1; 3) à la surface du stator (1, 3) suivant les n/2 premières trajectoires (15a) ;
- éloigner de l'axe (4) les têtes (70) relativement au stator (1; 3) ;
- déplacer les têtes (70) relativement au stator (1, 3) en rotation d'un angle (β) donné autour de l'axe (4) du stator (1, 3) ;
- rapprocher les têtes (70) jusqu'à la surface du stator (1; 3) ; et
- souder en déplaçant simultanément les têtes (70) activées relativement au stator (1; 3) à la surface du stator (1, 3) suivant les n/2 dernières trajectoires (15b).

10. Procédé de réalisation selon la revendication 9, caractérisé en ce que les têtes (70) parcourent les premières trajectoires (15a) dans un premier sens suivant la direction axiale du stator (1; 3) et parcourent les dernières trajectoires (15b) dans le sens opposé au premier sens.

11. Procédé de réalisation selon l'une des revendications 7 à 10, caractérisé en ce que le serrage des tôles (2) entre elles est assuré par les gaines isolantes de fond d'encoche du stator (1 ; 3).

12. Machine électrique tournante (17 ; 90 ; 28) caractérisée en ce qu'elle comprend un stator (1 ; 3) selon l'une des revendications 1 à 6.

13. Machine selon la revendication 12, caractérisée en ce que la machine comprend des moyens constituant sur le pourtour du stator (1, 3) des canaux (21; 31, 32) longitudinaux sensiblement parallèles à l'axe (4), ces canaux (21; 31, 32) étant ouverts du côté du stator (1, 3) et étant par ailleurs en communication directe avec une arrivée ou une sortie de fluide de refroidissement.

14. Machine selon la revendication 13, caractérisée en ce qu'au moins certains des canaux (21; 31, 32) sont en communication avec l'arrivée ou la sortie de fluide par au moins une extrémité (40) du canal.

15. Machine selon l'une des revendications 13 ou 14, caractérisée en ce que les canaux (21) sont espacés les uns des autres.

16. Machine selon la revendication 15, caractérisée en ce que la portion de stator (1, 3) située entre deux canaux (21) immédiatement voisins est au moins partiellement en contact avec le milieu ambiant de la machine, et en ce que le carter (18, 100) de celle-ci présente en face de ladite portion du stator (1, 3) au moins une ouverture traversante (26, 106) dont les bords (96, 105) sont sensiblement tangents au stator (1, 3), cette ouverture (106) ou ces ouvertures (26) s'étendant sensiblement sur toute la longueur axiale du stator (1, 3).

17. Machine selon l'une des revendications 13 ou 14, caractérisée en ce que les canaux (31, 32) sont adjacents et en ce que les canaux (31) d'un premier groupe et les autres canaux (32), constituant un deuxième groupe, sont en communication directe respectivement avec une arrivée et une sortie de fluide de refroidissement.

18. Machine selon la revendication 17, caractérisée en ce que les canaux (31, 32) sont en communication par une première extrémité (40) respectivement avec lesdites arrivée et sortie et sont obturés à une deuxième extrémité (41) opposée à la première extrémité (40).

19. Machine selon la revendication 18, caractérisée en ce que les extrémités obturées (41) de canaux (31, 32) contigus occupent des positions opposées suivant la direction axiale du stator (1, 3).

20. Machine selon l'une des revendications 17 à 19, caractérisée en ce que les canaux (31, 32) appartiennent respectivement aux premier et deuxième groupes suivant une alternance spatiale des canaux (31, 32).

21. Machine selon l'une des revendications 13 à 20, caractérisée en ce qu'au moins une portion (22; 80) de la paroi des canaux (21; 31, 32) est constituée par la paroi du carter.

22. Machine selon l'une des revendications 13 à 21, caractérisée en ce que la sortie de fluide de refroidissement est associée à des moyens (23a, 23b; 91) de dépression du fluide.

23. Machine selon l'une des revendications 13 à 22, caractérisée en ce que le carter a une forme adaptée à une fabrication par moulage ou injection sous pression de métal léger ou de matière plastique renforcée de fibres ou à une fabrication à partir d'une tôle découpée, roulée, soudée et emboutie.

## Patentansprüche

1. Gewickelter Stator (1, 3) mit Kerben für Elektro-Drehmaschine, bestehend aus Seite gegen Seite aufgestapelten Metallblechen (2), wobei jedes Blech (2) winkelmässig zu einem nächsten, benachbarten Blech (2) in Bezug auf die Achse (4) des Stators (1, 3) um einen konstanten Winkel (α) versetzt ist, der einem Vielfachen des der Teilung der Kerben entsprechenden Winkels entspricht, wobei jedes Blech (2) im wesentlichen die Form eines regelmässigen Polygons aufweist, insbesondere eines Vierecks, dessen Ecken (5) nach einer kreisförmigen Kontur (6) oder etwa einer kreisförmigen Kontur abgestumpft sind, symmetrisch in Bezug auf die Halbierende der besagten Ecke (5), identisch für alle Ecken (5), und entsprechend einem kreisförmigen Winkelabschnitt in der Mitte, im wesentlichen gleich oder grösser als der besagte Winkel (α), wobei der Abstand in Bezug auf die Achse (4) des Stators (1, 3) und die Form der besagten Kontur entsprechend dem Winkel (α) bestimmt werden, so dass die Kontur (6) eines Blechs (2), auf einer lotrechten Ebene zur Achse (4) des Stators (1, 3), die Kontur (6) eines nächsten, angrenzenden Blechs (2) im wesentlichen verlängert oder sich teilweise auf die besagte Kontur (6) legt, dadurch gekennzeichnet, dass mindestens eine von zwei abgestumpften Ecken (5) eines jeden Blechs (2) mit der entsprechenden Ecke (5) eines jeden der beiden angrenzenden Bleche (2) durch mindestens einen Schweisspunkt (11) verbunden ist, der sich an einer Stelle befindet, an der sich die beiden Konturen (6) verlängern oder sich übereinanderlegen, wobei sich die Schweisspunkte (11) in jeweiligen vorbestimmten Winkelpositionen befinden und in Bezug auf die Achse (4) des Stators (1, 3) zyklisch reproduzierbar und im wesentlichen regelmässig um die Achse (4) herum verteilt sind, so dass die Schweisspunkte (11) nach Linien (15a), 15b) der Schweisspunkte (11) ausgerichtet sind, die im wesentlichen parallel zur Achse (4) des Stators (1, 3) verlaufen.

2. Stator nach Anspruch 1, dadurch gekennzeichnet, dass jedes Blech (2) von einem Paket ersetzt wird, das aus mindestens zwei aufgestapelten Einzelblechen (2) von identischer Form besteht.

3. Stator (1, 3) nach Anspruch 1 oder 2, dadurch gekennzeichnet, dass jedes Blech (2) auf der Höhe eines jeden Schweisspunkts (11) leicht ausgeschnitten (9) ist.

4. Stator nach einem der Ansprüche 1 bis 3, dadurch gekennzeichnet, dass die Linien (15a, 15b) der Schweisspunkte (11) regelmässig um die Achse (4) des Stators (1, 3) herum verteilt sind.

5. Stator nach einem der Ansprüche 1 bis 4, wobei die an der Innenseite des Stators angeordneten Kerben eine leichte Neigung in Bezug auf die Achse (4) des Stators (1, 3) aufweisen, dadurch gekennzeichnet, dass die von den entsprechenden Schweisspunkten (11) gebildeten Linien (15a, 15b) eine Schraubenform Naben, die den gleichen Neigungswinkel in Bezug auf die Achse (4) des Stators (1, 3) aufweist.

6. Stator (1, 3) nach einem der Ansprüche 1 bis 5, dadurch gekennzeichnet, dass der Stator (1, 3) an mindestens einem seiner Enden eine axiale Platte (36a, 36b) aus einem relativ weichen, isolierenden und dichten Werkstoff, insbesondere aus Kunststoff, aufweist, deren Innenradius im wesentlichen dem Radius des Innenumfangs des Stators (1, 3) entspricht, wobei die Platte (36a, 36b) am Endblech (2) des Stators (1, 3) anhand von die Dicke dieses Blechs (2) durchquerenden Mitteln befestigt ist.

7. Herstellungsverfahren eines Stators (1; 3) nach einem der Ansprüche 1 bis 6, bestehend aus folgenden aufeinanderfolgenden Etappen:
- Ausschneiden der Bleche (2) in Form eines regelmässigen Polygons, insbesondere eines Vierecks, dessen Ecken (5) nach einer vorbestimmten Kontur (6) abgestumpft sind;
- Aufstapeln der Bleche (2) Seite gegen Seite, wobei jedes Blech (2) in Bezug auf das vorherige Blech (2) um einen konstanten Winkel (α) versetzt wird;
dadurch gekennzeichnet, dass man mindestens eine von zwei abgestumpften Ecken (5) eines jeden Blechs (2) mit der entsprechenden abgestumpften Ecke (5) jedes der beiden angrenzenden Bleche (2) durch mindestens einen Schweisspunkt (11) verbindet.

8. Verfahren nach Anspruch 7, dadurch gekennzeichnet, dass man die Schweissarbeit durch Verschieben eines oder mehrerer aktivierter Schweissköpfe (70) in Bezug auf den Stator (1, 3) an der Statoroberfläche (1; 3) nach kontinuierlichen, im wesentlichen parallel zur Achse (4) verlaufenden Wegen (15a, 15b) durchführt, wobei diese Wege so angeordnet sind, dass mindestens eine von zwei der abgestumpften Ecken eines jedem Blechs mit mindestens einem Schweisspunkt (11) an der entsprechenden Ecke eines jeden der angrenzenden Bleche (2) befestigt werden kann.

9. Verfahren nach Anspruch 8, dadurch gekennzeichnet, dass das Verfahren aus den nachstehenden aufeinanderfolgenden Etappen besteht, wobei die Anzahl n der Wege (15a, 15b) geradzahlig ist und zwei Mal diejenige der Schweissköpfe (70) beträgt:
- Schweissen durch gleichzeitiges Verschieben der n/2 aktivierten Köpfe (70) in Bezug auf den Stator (1; 3) an der Oberfläche des Stators (1, 3) nach den n/2 ersten Wegen (15a);
- die Köpfe (70) in Bezug auf den Stator (1; 3) von der Achse (4) entfernen;
- die Köpfe (70) in Bezug auf den Stator (1,3) verschieben, durch Drehen um einen gegebenen Winkel (β) um die Achse (4) des Stators (1, 3) herum;
- die Köpfe (70) bis zur Oberfläche des Stators (1; 3) annähern; und
- Schweissen durch gleichzeitiges Verschieben der aktivierten Köpfe (70) in Bezug auf den Stator (1; 3) an der Oberfläche des Stators (1, 3) nach den letzten n/2 Wegen (15b).

10. Herstellungsverfahren nach Anspruch 9, dadurch gekennzeichnet, dass die Köpfe (70) die ersten Wege (15a) in eine erste Richtung nach der axialen Richtung des Stators (1; 3) zurücklegen, und die letzten Wege (15b) in der zur ersten Richtung entgegengesetzten Richtung.

11. Herstellungsverfahren nach einem der Ansprüche 7 bis 10, dadurch gekennzeichnet, dass das Spannen der Bleche (2) miteinander durch die isolierenden Mäntel im Boden der Kerbe des Stators (1; 3) gewährleislet wird.

12. Elektro-Drehmaschine (17, 90; 28), dadurch gekennzeichnet, dass sie einen Stator (1; 3) nach einem der Ansprüche 1 bis 6 umfasst.

13. Maschine nach Anspruch 12, dadurch gekennzeichnet, dass die Maschine Mittel umfasst, die am Umfang des Stators (1, 3) längliche, im wesentlichen zur Achse (4) parallel verlaufende Kanäle (21; 31, 32) bilden, wobei diese Kanäle (21; 31, 32) zur Seite des Stators (1, 3) hin geöffnet sind und weiters in direkter Verbindung mit einem Kühlflüssigkeitseingang oder - ausgang stehen.

14. Maschine nach Anspruch 13, dadurch gekennzeichnet, dass zumindest bestimmte Kanäle (21; 31, 32) über mindestens einem Ende (40) des Kanals mit dem Flüssigkeitseingang oder -ausgang in Verbindung stehen.

15. Maschine nach einem der Ansprüche 13 oder 14, dadurch gekennzeichnet, dass die Kanäle (21) in Abständen zueinander angeordnet sind.

16. Maschine nach Anspruch 15, dadurch gekennzeichnet, dass der zwischen zwei unmittelbar benachbarten Kanälen (21) befindliche Statorabschnitt (1, 3) zumindest teilweise mit der Umgebung der Maschine in Kontakt steht, und dass ihr Gehäuse (18, 100) gegenüber dem besagten Statorabschnitt (1, 3) mindestens eine durchquerende Öffnung (26, 106) aufweist, deren Ränder (96, 105) im wesentlichen den Stator (1, 3) tangieren, wobei sich diese Öffnung (106) oder diese Öffnungen (26) im wesentlichen über die ganze axiale Länge des Stators (1, 3) erstrecken.

17. Maschine nach einem der Ansprüche 13 oder 14, dadurch gekennzeichnet, dass die Kanäle (31, 32) angrenzend sind, und dass die Kanäle (31) einer ersten Gruppe und die anderen Kanäle (32), die eine zweite Gruppe bilden, jeweils in direkter Verbindung mit einem Eingang und einem Ausgang einer Kühlflüssigkeit stehen.

18. Maschine nach Anspruch 17, dadurch gekennzeichnet, dass die Kanäle (31, 32) über ein erstes Ende (40) jeweils mit dem besagten Ein- und Ausgang in Verbindung stehen und an einem zweiten, dem ersten Ende (40) gegenüberliegenden Ende (41) geschlossen sind.

19. Maschine nach Anspruch 18, dadurch gekennzeichnet, dass die geschlossenen Enden (41) der angrenzenden Kanale (31, 32) nach der axialen Richtung des Stators (1, 3) gegenüberliegende Positionen besetzen.

20. Maschine nach einem der Ansprüche 17 bis 19, dadurch gekennzeichnet, dass die Kanäle (31, 32) nach einer räumlichen Wechselfolge der Kanäle (31, 32) jeweils der ersten und der zweiten Gruppe angehören.

21. Maschine nach einem der Ansprüche 13 bis 20, dadurch gekennzeichnet, dass mindestens ein Abschnitt (22; 80) der Wände der Kanäle (21; 31, 32) aus der Wand des Gehäuses besteht.

22. Maschine nach einem der Ansprüche 13 bis 21, dadurch gekennzeichnet, dass der Kühlflüssigkeitsausgang Depressionsmitteln (23a, 23b; 91) der Flüssigkeit zugeordnet ist.

23. Maschine nach einem der Ansprüche 13 bis 22, dadurch gekennzeichnet, dass das Gehäuse eine Form aufweist, die geeignet ist, durch Formerei oder Druckeinspritzung von Leichtmetall oder faserverstärktem Kunststoff hergestellt zu werden, oder ab einem ausgestanzten, gerollten, geschweissten und tiefgezogenen Blech.

## Claims

1. A slotted coil stator (1, 3) for an electrical rotating machine, consisting of metal plates (2) superimposed face to face, each plate (2) being shifted at an angle from the next adjacent plate (2), with respect to the axis (4) of the stator (1, 3), this angle (α) being constant and equal to a multiple of the angle corresponding to the slot pitch, each plate (2) substantially having the shape of a regular polygon, particularly a square, of which each corner (5) is truncated according to a circular contour (6), or close to a circular contour, symmetrical with respect to the bisector of said corner (5), identical for all the corners (5), and corresponding to an angular sector of a circle whose centre is substantially equal, or superior, to said angle (α), the distance with respect to the axis (4) of the stator (1, 3) and the shape of said contour being determined according to the angle (α) such that, projected onto a plane perpendicular to the axis (4) of the stator (1, 3), the contour (6) of a plate (2) substantially prolongs the contour (6) of an adjacent successive plate (2) or partially superimposes itself upon said contour (6), characterised in that at least every other truncated corner (5) of each plate (2) is connected to the corresponding corner (5) of each of the two adjacent plates (2) by at least one weld point (11) located at a spot where the two contours (6) prolong one another or are superimposed, the weld points (11) being located in predetermined and cyclically reproducible respective angular positions with respect to the axis (4) of the stator (1, 3) and being distributed about the axis (4) in a substantially regular manner such that the weld points (11) are aligned along lines (15a, 15b) of weld points (11) substantially parallel to the axis (4) of the stator (1, 3).

2. A stator according to claim 1, characterised in that each plate (2) is replaced with a pack comprising at least two individual superimposed plates (2) of identical shape.

3. A stator (1, 3) according to claim 1 or 2, characterised in that each plate (2) is slightly scalloped (9) at each weld point (11).

4. A stator according to any of claims 1 to 3, characterised in that the lines (15a, 15b) of weld points (11) are regularly distributed about the axis (4) of the stator (1, 3).

5. A stator according to any of claims 1 to 4, the slots provided on the inner face of the stator being slightly inclined with respect to the axis (4) of the stator (1, 3), characterised in that the lines (15a, 15b) formed by the corresponding weld points (11) have a helical shape with the same angle of inclination with respect to the axis (4) of the stator (1, 3).

6. A stator (1, 3) according to one of claims 1 to 5, characterised in that the stator (1, 3) has, at at least one of its ends, an axial plate (36a, 36b) made of a relatively soft, insulating and sealing material, particularly a plastic material, having an inside radius substantially equal to the radius of the inner periphery of the stator (1, 3), the plate (36a, 36b) being secured to the end plate (2) of the stator (1, 3) by means passing through the thickness of this plate (2).

7. A method for manufacturing a stator (1; 3) according to one of claims 1 to 6, comprising the successive steps of:
- cutting plates (2) into the shape of a regular polygon, particularly a square, of which each corner (5) is truncated according to a predetermined contour (6);
- piling up the plates (2) face to face, shifting each plate (2) a constant angle (α) from the previous plate (2);
characterised in that at least every other truncated corner (5) of each plate (2) is connected to the corresponding truncated corner (5) of the two adjacent plates (2) by at least one weld point (11).

8. A method according to claim 7, characterised in that the welding operation is carried out by displacing one or more activated welding head(s) (70), relative to the stator (1, 3), at the surface of the stator (1; 3), along continuous trajectories (15a, 15b) substantially parallel to the axis (4), these trajectories being arranged so as to weld at least every other truncated corner of each plate to the corresponding corner of each of the adjacent plates (2) with at least one weld point (11).

9. A method according to claim 8, characterised in that the number n of trajectories (15a, 15b) is even and twice that of the welding heads (70), the method comprising the successive steps of:
- welding by simultaneously displacing the n/2 activated heads (70) relative to the stator (1; 3) at the surface of the stator (1, 3) along the n/2 first trajectories (15a);
- removing the heads (70) relative to the stator (1; 3) from the axis (4);
- displacing the heads (70) relative to the stator (1, 3) by rotating them a given angle (β) about the axis (4) of the stator (1, 3);
- drawing up the heads (70) to the surface of the stator (1; 3); and
- welding by simultaneously displacing the activated heads (70) relative to the stator (1; 3) at the surface of the stator (1, 3) along the n/2 last trajectories (15b).

10. A manufacturing method according to claim 9, characterised in that the heads (70) cover the first trajectories (15a) in a first direction along the axial direction of the stator (1; 3) and they cover the last trajectories (15b) in the direction opposite to the first direction.

11. A manufacturing method according to one of claims 7 to 10, characterised in that the tightening together of the plates (2) is ensured by the slot root insulating sleeves of the stator (1; 3).

12. An electrical rotating machine (17; 90; 28) characterised in that it comprises a stator (1; 3) according to one of claims 1 to 6.

13. A machine according to claim 12, characterised in that the machine comprises means forming, on the periphery of the stator (1, 3), longitudinal channels (21; 31, 32) substantially parallel to the axis (4), these channels (21; 31, 32) being open on the stator (1, 3) side and being, in addition, in direct communication with a cooling fluid inlet or outlet.

14. A machine according to claim 13, characterised in that at least some of the channels (21; 31, 32) are in communication with the fluid inlet or outlet through at least one end (40) of the channel.

15. A machine according to one of claims 13 or 14, characterised in that the channels (21) are spaced from one another.

16. A machine according to claim 15, characterised in that the portion of the stator (1, 3) located between two immediately neighbouring channels (21) is at least partially in contact with the ambient medium of the machine, and in that the casing (18, 100) of the latter has, in front of said portion of the stator (1, 3), at least one through opening (26, 106) whose edges (96, 105) are substantially tangential to the stator (1, 3), this opening (106) or openings (26) extending substantially throughout the entire axial length of the stator (1, 3).

17. A machine according to one of claims 13 or 14, characterised in that the channels (31, 32) are adjacent and in that the channels (31) of a first group and the other channels (32), making up a second group, are in direct communication with a cooling fluid inlet and outlet, respectively.

18. A machine according to claim 17, characterised in that the channels (31, 32) are in communication, through a first end (40), with said inlet and outlet, respectively, and they are sealed at a second end (41) opposite to the first end (40).

19. A machine according to claim 18, characterised in that the sealed ends (41) of contiguous channels (31, 32) occupy opposite positions along the axial direction of the stator (1, 3).

20. A machine according to one of claims 17 to 19, characterised in that the channels (31, 32) belong to the first and second group, respectively, according to a spatial alternation of the channels (31, 32).

21. A machine according to one of claims 13 to 20, characterised in that at least one portion (22; 80) of the wall of the channels (21; 31, 32) consists of the wall of the casing.

22. A machine according to one of claims 13 to 21, characterised in that the cooling fluid outlet is associated with fluid depression means (23a, 23b; 91).

23. A machine according to one of claims 13 to 22, characterised in that the casing has a shape suitable for manufacture through moulding or pressure injection of a light metal or a fiber reinforced plastic material or for manufacture using a stamped, rolled, welded and buckled plate.
